# EUROPÄISCHE PATENTSCHRIFT

(11) **EP 0 672 212 B1**
(45) Veröffentlichungstag und Bekanntmachung des Hinweises auf die Patenterteilung: **12.06.1996**
(21) Anmeldenummer: 94901873.3
(22) Anmeldetag: 25.11.1993
(51) Int. Cl.: D21H 17/34, D21H 17/45, D21H 17/43

(54) **VERWENDUNG VON HYDROLYSIERTEN COPOLYMERISATEN AUS N-VINYLCARBONSÄUREAMIDEN UND MONOETHYLENISCH UNGESÄTTIGTEN CARBONSÄUREN BEI DER PAPIERHERSTELLUNG**
USE OF HYDROLYSED COPOLYMERS OF N-VINYL CARBOXYLIC ACID AMIDES AND MONOETHYLENICALLY UNSATURATED CARBOXYLIC ACIDS IN THE MANUFACTURE OF PAPER
UTILISATION DE COPOLYMERISATS HYDROLYSES D'AMIDES DE L'ACIDE N-VINYLCARBOXYLIQUE ET D'ACIDES CARBOXYLIQUES MONOETHYLENIQUEMENT INSATURES DANS LA FABRICATION DU PAPIER

(30) Priorität: 07.12.1992 DE 4241117
(43) Veröffentlichungstag der Anmeldung: 20.09.1995
(73) Patentinhaber: BASF Aktiengesellschaft, D-67063 Ludwigshafen (DE)
(72) Erfinder: NILZ, Claudia, D-67127 Roedersheim-Gronau (DE); DENZINGER, Walter, D-67346 Speyer (DE); HARTMANN, Heinrich, D-67117 Limburgerhof (DE); KROENER, Michael, D-68309 Mannheim (DE); LINHART, Friedrich, D-69123 Heidelberg (DE); SCHUHMACHER, Rudolf, D-67459 Boehl-Iggelheim (DE); MOENCH, Dietmar, D-69469 Weinheim (DE); STANGE, Andreas, D-68165 Mannheim (DE)
(86) Internationale Anmeldenummer: EP9303305
(87) Internationale Veröffentlichungsnummer: WO9413882

(56) Entgegenhaltungen:
- EP-A- 0 251 182
- EP-A- 0 453 991

## Beschreibung

Die Erfindung betrifft die Verwendung von Copolymerisaten, die durch Copolymerisieren von N-Vinylcarbonsäureamiden mit monoethylenisch ungesättigten Carbonsäuren mit 3 bis 8 C-Atomen und/oder deren Alkalimetall-, Erdalkalimettall oder Ammonium salzen und ggf. Vinylacetat, N-Vinylpyrrolidon, N-Vinylimidazol oder deren Mischungen und ggf. Verbindungen, die mindestens zwei ethylenisch ungesättigte nicht konjugierte Doppelbindungen im Molekül aufweisen, und teilweise oder vollständige Abspaltung der gruppen aus dem in das Copoly-Acylmerisat einpolymerisierten N-Vinylcarbonsäureamiden unter Bildung von Amin- bzw. Ammoniumgruppen erhältlich sind, als Zusatz zum Papierstoff zur Erhöhung der Entwässerungsgeschwindigkeit und der Retention bei der Papierherstellung sowie der Trocken- und Naßfestigkeit des Papiers.

Aus der US-A-2 721 140 ist bekannt, Polyvinylaminhydrochlorid als Hilfsmittel bei der Herstellung von Papier zu verwenden, wobei man insbesondere Papiere mit hoher Naßfestigkeit erhält. Das so behandelte Papier besitzt jedoch eine relativ hohe Vergilbungsneigung.

Aus der US-A-4 421 602 sind partiell hydrolysierte, wasserlösliche Homopolymerisate des N-Vinylformamids bekannt, die N-Vinylformamid- und Vinylamin-Einheiten enthalten. Diese Polymerisate werden als Mittel zur Erhöhung der Flockung, Retention und Entwässerungsgeschwindigkeit bei der Herstellung von Papier verwendet.

Aus der EP-A-0 438 744 sind Copolymerisate bekannt, die 99 bis 50 Gew.-% mindestens einer monoethylenisch ungesättigten Carbonsäure mit 3 bis 8 C-Atomen oder deren Salzen und 1 bis 50 Gew.-% N-Vinylcarbonsäureamide, vorzugsweise N-Vinylformamid, einpolymerisiert enthalten und die einer Hydrolyse unterworfen worden sind, bei der die Formylgruppen der N-Vinylcarbonsäureamide unter Bildung von Amin- bzw. Ammoniumgruppen abgespalten sind. Diese Copolymerisate werden als Wasserbehandlungsmittel zur Verminderung der Kesselsteinabscheidung und der Wasserhärteausscheidung in wasserführenden Systemen und bei der Eindampfung von Zuckersaft verwendet.

Aus der EP-A-0 216 387 sind Vinylamineinheiten enthaltende wasserlösliche Copolymerisate bekannt, die durch Copolymerisieren von N-Vinylformamid mit monoethylenisch ungesättigten Monomeren aus der Gruppe Vinylacetat, Vinylpropionat, C₁- bis C₄-Alkylvinylether, der Ester, Nitrile und Amide von Acrylsäure und Methacrylsäure und N-Vinylpyrrolidon und Abspalten der Formylgruppen aus den Copolymerisaten erhältlich sind. Diese Copolymerisate und vorzugsweise Copolymerisate aus N-Vinylformamid und Vinylacetat, deren Monomereinheiten zu jeweils 30 bis 100 Mol-% hydrolysiert sind, werden als Mittel zur Erhöhung der Trocken- und Naßfestigkeit von Papier verwendet.

Aus der EP-A-0 251 182 sind Copolymerisate bekannt, die Vinylamin-Gruppen in Salzform, Vinylformamid- und Acrylnitrilgruppen sowie ggfs. Acrylamid- und Acrylsäuregruppen enthalten. Der Anteil an einpolymerisierter Acrylsaure bzw. Methacrylsäure beträgt höchstens 6,4 Mol-%. Diese Copolymerisate werden bei der Herstellung von Papier verwendet und wirken als Entwasserungsund Retentionsmittel sowie als Mittel zur Erhöhung der Trockenfestigkeit von Papier.

Der vorliegenden Erfindung liegt die Aufgabe zugrunde, ein weiteres Papierhilfsmittel zur Verfügung zu stellen, das beim Zusatz zum Papierstoff zu einer Erhöhung der mechanischen Festigkeiten der so hergestellten Papiere führt und gleichzeitig eine Erhöhung der Entwässerungsbeschleunigung und Retention bewirkt.

Die Aufgabe wird erfindungsgemäß gelost mit der Verwendung von Copolymerisaten, die durch Copolymerisieren von
a) 5 bis 99 Mol-% N-Vinylcarbonsäureamiden der Formel 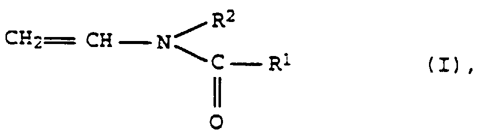 in der R¹, R² = H oder C₁ bis C₆-Alkyl bedeuten,
b) 95 bis 1-Mol-% monoethylenisch ungesättigten Carbonsäuren mit 3 bis 8 C-Atomen und/oder deren Alkalimetall- und Ammoniumsalzen und gegebenenfalls
c) bis zu 30 Mol-% Vinylacetat, N-Vinylpyrrolidon, N-Vinylimidazol oder deren Mischungen und gegebenenfalls
d) bis zu 2 Mol-% an Verbindungen, die mindestens zwei ethylenisch ungesättigte nicht-konjugierte Doppelbindungen im Molekul aufweisen
und anschließende teilweise oder vollstandige Abspaltung der Gruppen 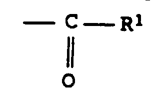 aus den in das Copolymerisat einpolymerisierten Monomeren I unter Bildung von Amin- bzw. Ammoniumgruppen erhältlich sind, als Zusatz zum Papierstoff zur Erhöhung der Entwässerungsgeschwindigkeit und der Retention bei der Papierherstellung sowie der Trocken- und Naßfestigkeit des Papiers.

Die erfindungsgemäß zu verwendenden Copolymerisate werden durch radikalisch initiierte Copolymerisation von N-Vinylcarbonsäureamiden und monoethylenisch ungesättigten Carbonsäuren, vorzugsweise Acrylsäure und/oder Methacrylsäure und deren Salzen und gegebenenfalls anderen monoethylenisch ungesättigten Monomeren, hergestellt. Die Copolymerisation kann gegebenenfalls auch zusatzlich noch in Gegenwart von Vernetzern durchgeführt werden.

Als Monomere der Gruppe a) kommen N-Vinylcarbonsäureamide der Formel 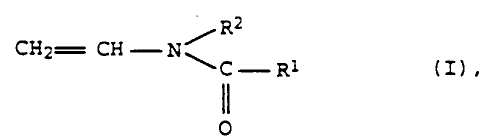 in der R¹, R² = H oder C₁ bis C₆-Alkyl bedeuten, in Betracht. Geeignete Monomere sind beispielsweise N-Vinylformamid, N-Vinyl-N-Methylformamid, N-Vinylacetamid, N-Vinyl-N-methylacetamid, N-Vinyl-N-ethylacetamid, N-Vinyl-N-methylpropionamid und N-Vinylpropionamid. Zur Herstellung der Copolymeren können die genannten Monomeren entweder allein oder in Mischung untereinander eingesetzt werden. Vorzugsweise verwendet man aus dieser Gruppe von Monomeren N-Vinylformamid. Die Copolymerisate enthalten die Monomeren der Gruppe a) in Mengen von 5 bis 99, vorzugsweise 30 bis 95 Mol-% in einpolymerisierter Form.

Als Monomere der Gruppe b) kommen monoethylenisch ungesättigte Carbonsäuren mit 3 bis 8 C-Atomen sowie die wasserlöslichen Salze dieser Monomeren in Betracht. Zu dieser Gruppe von Monomeren gehören beispielsweise Acrylsäure, Methacrylsäure, Dimethylacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder auch Mischungen der genannten Carbonsäuren, insbesondere Mischungen aus Acrylsäure und Maleinsäure oder Mischungen aus Acrylsäure und Methacrylsäure. Die Monomeren der Gruppe b) können entweder in Form der freien Carbonsäuren oder in partiell oder vollständig neutralisierter Form bei der Copolymerisation eingesetzt werden. Zur Neutralisation der monoethylenisch ungesättigten Carbonsäuren verwendet man beispielsweise Alkalimetall-, Erdalkalimetallbasen, Ammoniak oder Amine, z.B. Natronlauge, Kalilauge, Soda, Pottasche, Natriumhydrogencarbonat, Magnesiumoxid, Calciumhydroxid, Calciumoxid, Ammoniak, Triethylamin, Ethanolamin, Diethanolamin, Triethanolamin, Morpholin, Diethylentriamin oder Tetraethylenpentamin. Die Copolymerisate enthalten die Monomoren der Gruppe b) in einer Menge von 95 bis 1, vorzugsweise 70 bis 5 Mol-% in einpolymerisierter Form.

Die Copolymerisate aus den Monomeren a) und b) können ggfs. dadurch modifiziert werden, daß man bei der Copolymerisation Vinylacetat, N-Vinylpyrrolidon, N-Vinylimidazol oder deren Mischungen einsetzt. Sofern die Monomeren der Gruppe c) zur Modifizierung der Copolymerisate eingesetzt werden, sind sie in Mengen bis zu 30 Mol-% in den Copolymerisaten in einpolymerisierter Form vorhanden, vorzugsweise in Mengen von 1 bis 20 Mol-%.

Die Copolymerisate aus den Monomeren a) und b) sowie gegebenenfalls c) können weiterhin dadurch modifiziert werden, daß man die Copolymerisation in Gegenwart von Monomeren der Gruppe d) vornimmt, bei der es sich um Verbindungen handelt, die mindestens zwei ethylenisch ungesättigte nicht konjugierte Doppelbindungen im Molekül aufweisen. Die Mitverwendung der Monomeren der Gruppe d) bei der Copolymerisation bewirkt eine Erhöhung der K-Werte der Copolymerisate. Geeignete Verbindungen der Gruppe d) sind beispielsweise Methylenbisacrylamid, Ester von Acrylsäure und Methacrylsäure mit mehrwertigen Alkoholen, wie Glykoldiacrylat, Glycerintriacrylat, Glycoldimethacrylat, Glycerintrimethacrylat sowie mindestens zweifach mit Acrylsäure oder Methacrylsäure veresterte Polyethylenglykole oder Polyole, wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, wie Glykoldiacrylat oder Glykoldiacrylate von Polyethylenglykolen eines Molekulargewichts bis zu 3.000. Sofern die Monomeren der Gruppe d) zur Modifizierung der Copolymerisate eingesetzt werden, betragen die angewendeten Mengen bis zu 2 Mol-%. Im Falle ihres Einsatzes sind sie vorzugsweise zu 0,01 bis 1 Mol-% in den Copolymerisaten in einpolymerisierter Form enthalten.

Bevorzugt ist die Verwendung von Verbindugen, die durch Copolymerisieren von
a) 30 bis 95 Mol-% N-Vinylformamid,
b) 70 bis 5 Mol-% Acrylsäure, Methacrylsäure und/oder deren Alkalimetall-, Erdalkalimetall-, Ammonium- oder Aminsalzen und
c) 0 bis 30 Mol-%, Vinylacetat, N-Vinylpyrrolidon, N-Vinylimidazol oder deren Mischungen und anschließende partielle oder vollständige Hydrolyse der einpolymerisierten N-Vinylformamideinheiten erhältlich sind, z.B. Copolymerisate aus N-Vinylformamid, Acrylsäure und Vinylacetat, Copolymerisate aus N-Vinylformamid, Acrylsäure und N-Vinylpyrrolidon. In den zuletzt beschriebenen Copolymerisaten kann die Acrylsäure ganz oder teilweise durch Methacrylsäure ersetzt sein. Acrylsäure oder Methacrylsäure können partiell oder vollständig mit Natronlauge, Kalilauge, Calciumhydroxid oder Ammoniak neutralisiert sein.

Die Herstellung der Copolymerisate erfolgt nach bekannten Verfahren, z.B. der Lösungs-, Fällungs-, Suspensions- oder Emulsionspolymerisation unter Verwendung von Verbindungen, die unter den Polymerisationsbedingungen Radikale bilden. Die Polymerisationstemperaturen liegen üblicherweise in dem Bereich von 30 bis 200, vorzugsweise 40 bis 110°C. Geeignete Initiatoren sind beispielsweise Azo- und Peroxyverbindungen sowie die üblichen Redoxinitiatorsysteme, wie Kombinationen aus Wasserstoffperoxyd und reduzierend wirkenden Verbindungen, z.B. Natriumsulfit, Natriumbisulfit, Natriumformaldehydsulfoxilat und Hydrazin. Diese Systeme können gegebenenfalls zusätzlich noch geringe Mengen eines Schwermetallsalzes enthalten.

Die Copolymerisate werden bevorzugt durch Lösungspolymerisation in Wasser hergestellt, wobei man die Monomeren der Gruppe b) vorzugsweise in der Salzform einsetzt und den pH-Wert während der Polymerisation zwischen 6 und 8 hält. Um den pH-Wert während der Copolymerisation konstant zu halten, ist es zweckmäßig, geringe Mengen, z.B. 0,5 bis 2 Gew.-%, eines Puffers, wie beispielsweise Dinatriumhydrogenphosphat zuzusetzen. Als Polymerisationsinitiator werden vorzugsweise wasserlösliche Azoverbindungen, wie 2,2'-Azobis(2-methylpropionamidin)dihydrochlorid, 2,2'-Azobis-(4-Methoxy-2,4-dimethylvaleronitril) und 2,2'-Azobis-(2-methyl-N-phenylpropionamidin)dihydrochlorid verwendet.

Um niedrigmolekulare Copolymerisate herzustellen, führt man die Copolymerisation in Gegenwart eines Reglers durch. Geeignete Regler sind beispielsweise sekundäre Akohole, wie Isopropanol und sek.-Butanol, Hydroxylamin, Ameisensäure sowie Mercaptoverbindungen, wie Mercaptoethanol, Mercaptopropanol, Mercaptobutanol, Thioglykolsäure, Thiomilchsäure, tert.-Butylmercaptan, Octylmercaptan und Dodecylmercaptan. Die Regler werden üblicherweise in Mengen von 0,01 bis 5 Gew.-%, bezogen auf die eingesetzten Monomeren, angewendet. Sofern man sekundäre Alkohole als Regler verwendet, kann die Polymerisation auch in Gegenwart wesentlich größerer Mengen erfolgen, z.B. in Mengen bis zu 80 Gew.-%, bezogen auf die Monomeren. In diesen Fällen sind die sekundären Alkohole gleichzeitig Lösemittel für die Monomeren.

Die so erhältlichen Copolymerisate haben K-Werte von 30 bis 300, vorzugsweise 50 bis 250. Die K-Werte werden bestimmt nach H.Fikentscher in 5 %iger wäßriger Kochsalzlösung bei pH 7, 25°C und einer Polymerkonzentration von 0,1 Gew.-%.

Aus den oben beschriebenen Copolymerisaten erhält man durch teilweise oder vollständige Abspaltung der Formylgruppen aus dem in das Copolymerisat einpolymerisierten Monomeren I unter Bildung von Amin- bzw. Ammoniumgruppen die erfindungsgemäß zu verwendenden hydrolysierten Copolymerisate:

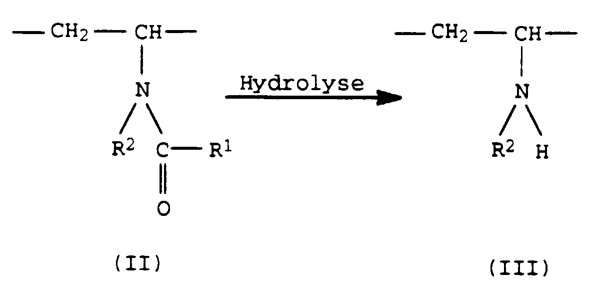

In den Formeln (II) und (III) haben die Substituenten R¹ und R² jeweils die in Formel (I) angegebene Bedeutung. In Abhängigkeit von den bei der Hydrolyse gewählten Reaktionsbedingungen erhält man entweder eine partielle oder vollständige Hydrolyse der Einheiten II. Die Hydrolyse wird so weit geführt, daß 30 bis 100, vorzugsweise 60 bis 95 %, der in das Copolymerisat einpolymerisierten Monomeren a) hydrolysiert sind. Bei der Hydrolyse von Vinylformamid-Einheiten enthaltenden Copolymerisaten kann der Hydrolysegrad beispielsweise durch Polyelektrolyttitration oder durch enzymatische Analyse der freigesetzten Ameisensäure bestimmt werden. Sofern die Copolymerisate außer den Monomeren a) und b) noch Monomere der Gruppe c) einpolymerisiert enthalten, so können auch die einpolymerisierten Monomeren c) je nach gewählter Hydrolysebedingung chemisch verändert werden, z.B. entstehen aus Vinylacetat-Einheiten Vinylalkohol-Einheiten. Der Hydrolysegrad der oben angegebenen Einheiten II beträgt vorzugsweise 60 bis 95 %.

Als Hydrolysemittel eignen sich vor allem Mineralsäuren, wie Halogenwasserstoffe, die gasförmig oder in wäßriger Lösung eingesetzt werden können. Vorzugsweise verwendet man Salzsäure, Schwefelsäure, Salpetersäure und Phosphorsäure sowie organische Säuren, wie C₁- bis C₅-Carbonsäuren und aliphatische oder aromatische Sulfonsäuren. Der pH-Wert bei der sauren Hydrolyse beträgt -1 bis 5, vorzugsweise 0 bis 2. Pro Formylgruppenäquivalent, das aus den einpolymerisierten Einheiten II abgespalten werden soll, benötigt man 0,05 bis 2, vorzugsweise 1 bis 1,5 Moläquivalente einer Säure.

Die Hydrolyse der einpolymerisierten Einheiten der Struktur II kann auch mit Hilfe von Basen vorgenommen werden, z.B. von Metallhydroxyden, insbesondere von Alkalimetall- und Erdalkalimetallhydroxyden. Vorzugsweise verwendet man Natriumhydroxyd oder Kaliumhydroxyd. Die Hydrolyse kann ggfs. auch in Gegenwart von Ammoniak oder Aminen durchgeführt werden.

Besonders bewährt hat sich die Hydrolyse der Copolymerisate in wäßriger Lösung oder Suspension bei Reaktionstemperaturen von 20 bis 100°C. Sofern die nicht hydrolysierten Copolymerisate in Wasser schwer löslich sind, lösen sie sich in aller Regel mit fortschreitender Hydrolyse im Reaktionsmedium auf. Im Anschluß an eine sauer durchgeführte Hydrolyse wird das Reaktionsgemisch gegebenenfalls mit Basen, vorzugsweise Natronlauge, neutralisiert. Falls die Hydrolyse mit Basen durchgeführt worden ist, kann das Reaktionsgemisch gegebenenfalls durch Zusatz von Säuren, vorzugsweise von Salzsäure, neutralisiert werden. Die pH-Werte des Reaktionsgemisches können nach der Hydrolyse zwischen 1 und 10, vorzugsweise zwischen 3 und 8, liegen. Je nach Zusammensetzung können die hydrolysierten Copolymerisate in bestimmten pH-Bereichen schwer löslich sein. Der K-Wert der hydrolysierten Copolymerisate beträgt 10 bis 300, vorzugsweise 15 bis 200 (gemessen in 5 %iger wäßriger Kochsalzlösung bei einer Polymerkonzentration von 0,1 Gew.-%, einem pH-Wert von 1,5 und einer Temperatur von 25°C).

Die hydrolysierten Copolymerisate werden erfindungsgemäß bei der Herstellung von Papier verwendet. Sie werden dem Papierstoff in Mengen von 0,01 bis 5, vorzugsweise 0,1 bis 2 Gew.-%, bezogen auf trockene Fasern, zugesetzt. Die hydrolysierten Copolymerisate bewirken sowohl eine Erhöhung der Entwässerungsgeschwindigkeit und der Retention bei der Papierherstellung als auch gleichzeitig eine Erhöhung der Trocken- und Naßfestigkeit des Papiers.

Die K-Werte der Copolymerisate wurden nach H.Fikentscher, Cellulosechemie, Band 13, 48-64 und 71-74 (1932) in 5 %iger wäßriger Kochsalzlösung bei 25°C und einer Polymerkonzentration von 0,1 Gew.-% bestimmt, wobei der K-Wert der nicht hydrolysierten Copolymerisate bei pH 7 und der der hydrolysierten Copolymerisate bei 1,5 gemessen wurde.

### Beispiele

### Herstellung der Copolymerisate

### Copolymerisat 1

In einer Polymerisationsapparatur, die mit einem Rührer ausgestattet ist, werden 991 g destilliertes Wasser, 1,54 g 75 %ige Phosphorsäure und 1,06 g 50 %ige wäßrige Natronlauge im schwachen Stickstoffstrom auf eine Temperatur von 70°C erhitzt. Sobald diese Temperatur erreicht ist, gibt man innerhalb von 2 Stunden eine Lösung von 50 g Wasser, 39,2 g Acrylsäure und 43,6 g 50 %iger wäßriger Natronlauge, separat davon 160 g N-Vinylformamid und ebenfalls separat davon eine Lösung von 25 g Wasser und 0,05 g 2,2'-Azobis(2-methylpropionamidin)dihydrochlorid, gleichmäßig zu. Nach Beendigung der Monomerzugabe dosiert man innerhalb von 1 Stunde eine Lösung von 0,15 g 2,2'-Azobis(2-methylpropionamidin)dihydrochlorid in 73 g Wasser zu und rührt das Reaktionsgemisch anschließend noch 2 Stunden bei einer Temperatur von 70°C und verdünnt es dann mit 800 g Wasser. Die so erhältliche stark viskose Lösung besitzt einen Feststoffgehalt von 10,9 % und hat einen pH-Wert von 6,2. Der K-Wert des Copolymerisats beträgt 177.

### Hydrolyse des einpolymerisierten N-Vinylformamids von Copolymerisat 1

500 g der oben beschriebenen wäßrigen Lösung eines Copolymerisates aus 75,4 Gew.-% Vinylformamid und 24,6 Gew.-% Natriumacrylat vom K-Wert 177 werden in einer Apparatur vorgelegt, die mit einem Rührer ausgestattet ist und mit 250 g Wasser verdünnt. Die Mischung wird zunächst bei Raumtemperatur gerührt und innerhalb von 20 min mit 80,2 g 38 %iger Salzsäure versetzt. Danach erhitzt man das Reaktiongsgemisch 7 Stunden auf eine Temperatur von 70°C, kühlt es auf Raumtemperatur ab und fügt 120 g einer 10 %igen wäßrigen Natronlauge zu. Der pH-Wert des Reaktionsgemisches beträgt danach 1,5. Um das Reaktiongsgemisch zu stabilisieren, fügt man 15 g einer 0,5 %igen wäßrigen Natriumbisulfitlösung zu. Der Hydrolysegrad des einpolymerisierten N-Vinylformamids beträgt 93 %. Die Lösung hat einen Polymergehalt von 5,8 Gew.-% (hydrolysiertes Copolymerisat 1). Der K-Wert des Polymeren beträgt 135.

### Copolymerisat 2

In einer Polymerisationsapparatur werden 965,3 g Wasser, 1,34 g einer 75 %igen wäßrigen Phosphorsäure und 0,92 g einer 50 %igen wäßrigen Natronlauge im Stickstoffstrom auf einer Temperatur von 70°C erhitzt. Sobald diese Temperatur erreicht ist, fügt man jeweils innerhalb von 2 Stunden eine Mischung aus 100 g Wasser, 60 g Acrylsäure und 66,5 g 50 %iger wäßriger Natronlauge und separat davon 141,4 g N-Vinylformamid und ebenfalls separat davon eine Lösung von 0,05 g 2,2'-Azobis(2-methylpropionamidin)dihydrochlorid in 25 g Wasser gleichmäßig zu. Nach Beendigung der Initiator- und Monomerzugabe fügt man innerhalb von 1 Stunde eine Lösung von 0,15 g 2,2'-Azobis(2-methylpropionamidin)dihydrochlorid, gelöst in 73 g Wasser, zu und hält das Reaktionsgemisch während dieser Zeit und 2 Stunden nach Zugabe des Initiators auf einer Temperatur von 70°C. Danach fügt man 800 ml Wasser zu und erhält eine stark viskose Lösung, die einen Feststoffgehalt von 11,0 % und einen pH-Wert von 6,6 hat. Der K-Wert des Copolymerisats beträgt 172.

### Hydrolyse

500 g der oben beschriebenen wäßrigen Lösung des Copolymerisats aus 64,1 Gew.-% N-Vinylformamid und 35,9 Gew.-% Natriumacrylat werden in einer Rührapparatur vorgelegt und durch Zugabe von 250 g Wasser verdünnt. Danach fügt man innerhalb von 20 min bei Raumtemperatur 77,2 g 38 %ige Salzsäure zu. Das Reaktionsgemisch wird dann auf eine Temperatur von 70°C erhitzt und 8 Stunden bei dieser Temperatur gerührt. Danach kühlt man es auf Raumtemperatur ab und gibt 120 g einer 10 %igen wäßrigen Natronlauge zu. Der pH-Wert des Gemisches beträgt danach 1,5. Um das Reaktionsgemisch zu stabilisieren, fügt man 15 g einer 0,5 %igen wäßrigen Natriumbisulfitlösung zu. Der Hydrolysegrad des einpolymerisierten N-Vinylformamids beträgt 95 %. Die Reaktionslösung hat einen Polymergehalt von 5,6 %. Das Copolymerisat enthält Vinylaminhydrochlorid-, Vinylformamid- und Acrylsäure-Einheiten (hydrolysiertes Copolymerisat 2). Der K-Wert des Polymeren beträgt 126.

### Beispiel 1

Aus 50 % Fichtensulfitzellstoff und 50 % Buchensulfitzellstoff wurde eine 0,5 %ige Stoffsuspension in Wasser hergestellt. Der pH-Wert der Stoffsuspension betrug 7,0, der Mahlgrad 30° Schopper-Riegler (SR). Die Stoffsuspension wurde anschließend in 5 gleiche Teile geteilt, von denen 4 der Stoffsuspensionen mit den unter b) bis e) angegebenen Zusätzen versetzt wurden. Die 5 Stoffsuspensionen wurden anschließend zu Blättern einer Flächenmasse von 80 g/m² in einem Rapid-Köthen-Laborblattbildner verarbeitet.

Zusammensetzung der Stoffsuspensionen:
a) Die Stoffsuspension enthielt keine weiteren Zusätze.
b) Der Stoffsuspension wurde 1 %, bezogen auf die Faserstoffe, einer wäßrigen Lösung eines handelsüblichen Neutralnaßfestharzes auf Basis eines Umsetzungsproduktes von Epichlorhydrin und einem Polyamidoamin aus Diethylentriamin und Adipinsäure zugesetzt.
c) Der Stoffsuspension wurde 1 %, bezogen auf Faserstoff, einer wäßrigen Lösung eines Polyvinylaminhydrochlorids gemäß der US-A-2 721 140 zugesetzt.
d) Der Stoffsuspension wurde 1 %, bezogen auf Faserstoff, des hydrolysierten Copolymerisats 1 zugesetzt.
e) Der Stoffsuspension wurde 1 %, bezogen auf Faserstoff, des hydrolysierten Copolymerisats 2 zugesetzt.

Aus den oben beschriebenen Papierstoffsuspensionen wurden die Blätter a) bis e) hergestellt. Von den erhaltenen Blättern wurde die Weiße, die Trockenreißlänge und die Naßreißlänge gemessen. Die Ergebnisse sind in Tabelle 1 angegeben.

**Tabelle 1**

| | a) | b) | c) | d) | e) |
|---|---|---|---|---|---|
| | Vergleich | | | (erfindungsgemäß) | |
| Weiße (% Remissionswert) | 77,9 | 73,5 | 73,4 | 73,1 | 74,0 |
| Trockenreißlänge (m) | 2354 | 2903 | 2927 | 3102 | 2895 |
| Naßreißlänge (m) | | | | | |
| ungealtert | 104 | 908 | 978 | 1009 | 956 |
| 5 min bei 110 C gealtert | 106 | 1032 | 1005 | 1118 | 1040 |

### Beispiel 2

Aus 50 % Fichtensulfitzellstoff und 50 % Buchensulfitzellstoff wurde eine 0,5 %ige Stoffsuspension in Wasser hergestellt. Der pH-Wert der Stoffsuspension betrug 4,5. der Mahlgrad 30°SR. Die Stoffsuspension wurde anschließend in 5 gleiche Teile geteilt, von denen die Proben b) bis e) jeweils mit 1 %, bezogen auf trockenen Faserstoff, der unten angegebenen Zusätze versetzt wurden. Folgende Stoffsuspensionen wurden verarbeitet:
a) Die oben beschriebene Stoffsuspension enthielt keine weiteren Zusätze.
b) Der Stoffsuspension wurde eine wäßrige Lösung eines handelsüblichen Naßfestharzes auf Basis eines Umsetzungsproduktes von Harnstoff und Formaldehyd zugesetzt.
c) Der Stoffsuspension wurde eine wäßrige Lösung eines hydrolysierten Copolymerisats aus 70 % N-Vinylformamid und 30 % Vinylacetat, K-Wert des Polymerisats 100, Hydrolysegrad von N-Vinylformamid und Vinylacetat >90 % zugesetzt.
d) Der Stoffsuspension wurde das hydrolysierte Copolymerisat 1 zugesetzt.
e) Der Stoffsuspension wurde das hydrolysierte Copolymerisat 2 zugesetzt.

Die oben beschriebenen Stoffsuspensionen wurden auf einem Rapid-Köthen-Gerät zu den Blättern a) bis e) verarbeitet. Die Weiße, Trockenreißlänge und die Naßfestigkeit der erhaltenen Blätter sind in Tabelle 2 angegeben

**Tabelle 2**

| | a) | b) | c) | d) | e) |
|---|---|---|---|---|---|
| | Vergleich | | | (erfindungsgemäß) | |
| Weiße (% Remissionswert) | 80,4 | 77,9 | 75,1 | 75,3 | 75,8 |
| Trockenreißlänge (m) | 3278 | 3817 | 3950 | 4551 | 4159 |
| Naßreißlänge (m) | | | | | |
| ungealtert | 134 | 796 | 1024 | 1101 | 877 |
| 5 min bei 130 C gealtert | 143 | 1031 | 1062 | 1196 | 998 |

### Beispiel 3

Aus gemischtem Altpapier wurde eine 0,2 %ige Stoffsuspension in Wasser hergestellt. Der pH-Wert der Suspension betrug 7, der Mahlgrad 67°SR. Die Stoffsuspension wurde in 10 gleiche Teile geteilt. Eine Probe der Stoffsuspension blieb unverändert, während den anderen 9 Proben die unten angegebenen Zusätze zugefügt wurden. Folgende Proben lagen vor:
a) Die oben beschriebene Stoffsuspension enthält keine weiteren Zusätze.
b) Der oben beschriebenen Stoffsuspension wurden 0,1 %, jeweils bezogen auf die Feststoffe, einer 0,1 %igen wäßrigen Lösung eines handelsüblichen neutralen Naßfestharzes auf Basis eines Umsetzungsprodukts von Epichlorhydrin und einem Polyamidoamin aus Diethylentriamin und Adipinsäure zugesetzt.
c) Der oben beschriebenen Stoffsuspension wurden 0,2 %, jeweils bezogen auf die Feststoffe, des unter b) beschriebenen handelsüblichen neutralen Naßfestharzes zugesetzt.
d) Der oben beschriebenen Stoffsuspension wurden 0,4 %, jeweils bezogen auf die Feststoffe, des unter b) beschriebenen handelsüblichen neutralen Naßfestharzes zugesetzt.
e) Der oben beschriebenen Stoffsuspension wurden 0,1 %, jeweils bezogen auf die Feststoffe, einer 0,1 %igen wäßrigen Lösung des hydrolysierten Copolymerisats 2 zugegeben.
f) Die oben beschriebene Stoffsuspension wurde mit 0,2 %, jeweils bezogen auf die Feststoffe einer 0,1 %igen wäßrigen Lösung des hydrolysierten Copolymerisats 2 versetzt.
g) Die oben beschriebene Stoffsuspension wurde mit 0,4 %, jeweils bezogen auf die Feststoffe, einer 0,1 %igen wäßrigen Lösung des hydrolysierten Copolymerisats 2 versetzt.
h) Der oben beschriebenen Stoffsuspension wurden 0,1 %, jeweils bezogen auf die Feststoffe, einer 0,1 %igen wäßrigen Lösung des hydrolysierten Copolymerisats 1 zugesetzt.
i) Der oben beschriebenen Stoffsuspension wurden 0,2 %, jeweils bezogen auf die Feststoffe, einer 0,1 %igen wäßrigen Lösung des hydrolysierten Copolymerisats 1 zugesetzt.
j) Der Stoffsuspension wurden 0,4 %, jeweils bezogen auf die Feststoffe, einer 0,1 %igen wäßrigen Lösung des hydrolysierten Copolymerisats 1 zugesetzt.

Die Proben b) bis j) wurden jeweils nach einer 5minütigen Einwirkungszeit des Zusatzes in einem Laborblattbildner unter Bildung von Blättern einer Flächenmasse von 68 g/m² entwässert. Um den Aschegehalt zu bestimmen und damit ein Maß für die Retention zu bekommen, wurden die Blätter bei Temperaturen von 900 bis 1000°C in einem Muffelofen verbrannt und der Glührückstand gravimetrisch bestimmt. Die dabei erhaltenen Ergebnisse sind in Tabelle 3 angegeben.

**Tabelle 3**

| Beispiel | % Asche im Papier | Zusatz in % |
|---|---|---|
| a) Vergleichsbeispiel | 5,1 | 0 |
| b) Vergleichsbeispiel | 8,6 | 0,1 |
| c) Vergleichsbeispiel | 9,0 | 0,2 |
| d) Vergleichsbeispiel | 10,1 | 0,4 |
| e) (erfindungsgemäß) | 10,2 | 0,1 |
| f) (erfindungsgemäß) | 11,2 | 0,2 |
| g) (erfindungsgemäß) | 11,6 | 0,4 |
| h) (erfindungsgemäß) | 10,4 | 0,1 |
| i) (erfindungsgemäß) | 11,1 | 0,2 |
| j) (erfindungsgemäß) | 11,4 | 0,4 |

### Beispiel 4

Aus gemischtem Altpapier wurde eine 0,2 %ige Stoffsuspension in Wasser hergestellt. Der pH-Wert der Stoffsuspension betrug 7, der Mahlgrad 67°SR. Die Stoffsuspension wurde in 10 gleiche Teile geteilt, von denen 9 mit den unten angegebenen Zusätzen versetzt wurden:
a) Diese Probe enthielt keine Zusätze.
b) Der Stoffsuspension wurden 0,1 %, jeweils bezogen auf die Feststoffe, einer 0,1 %igen wäßrigen Lösung eines handelsüblichen neutralen Naßfestharzes auf Basis eines Umsetzungsprodukts von Epichlorhydrin und einem Polyamidoamin aus Diethylentriamin und Adipinsäure zugesetzt.
c) Der oben beschriebenen Suspension wurden 0,25 % des unter b) beschriebenen handelsüblichen Neutralnaßfestharzes zugesetzt.
d) Der oben beschriebenen Stoffsuspension wurden 0,4 %, jeweils bezogen auf die Feststoffe, des unter b) beschriebenen Neutralnaßfestharzes zugesetzt.
e) Der Stoffsuspension wurden 0,1 %, jeweils bezogen auf die Feststoffe, einer 0,1 %igen wäßrigen Lösung des hydrolysierten Copolymerisats 2 zugesetzt.
f) Der Suspension wurden 0,25 % des hydrolysierten Copolymerisats 2 zugesetzt.
g) Der Suspension wurden 0,4 %, jeweils bezogen auf die Feststoffe, des hydrolysierten Copolymerisats 2 zugesetzt.
h) Der oben beschriebenen Stoffsuspension wurden 0,1 %, jeweils bezogen auf die Feststoffe, einer 0,1 %igen wäßrigen Lösung des hydrolysierten Copolymerisats 1 zugesetzt.
i) Der Stoffsuspension wurden, jeweils bezogen auf die Feststoffe, 0,25 % des hydrolysierten Copolymerisats 1 zugesetzt.
j) Der Suspension wurden, jeweils bezogen auf die Feststoffe, 0,4 % des hydrolysierten Copolymerisats 1 zugesetzt.

Die oben beschriebenen Proben wurden nach einer Einwirkungszeit von 5 min auf einem Schopper-Riegler-Gerät bei Raumtemperatur entwässert. Die Entwässerungszeit ist in Tabelle 4 angegeben.

**Tabelle 4**

| Beispiel | Entwässerungszeit (s/700 ml) | Zusatz in % |
|---|---|---|
| a) Vergleichsbeispiel | 89 | 0 |
| b) Vergleichsbeispiel | 68 | 0,1 |
| c) Vergleichsbeispiel | 60 | 0,25 |
| d) Vergleichsbeispiel | 50 | 0,4 |
| e) (erfindungsgemäß) | 57 | 0,1 |
| f) (erfindungsgemäß) | 21 | 0,25 |
| g) (erfindungsgemäß) | 10 | 0,4 |
| h) (erfindungsgemäß) | 46 | 0,1 |
| i) (erfindungsgemäß) | 31 | 0,25 |
| j) (erfindungsgemäß) | 21 | 0,4 |

## Patentansprüche

1. Verwendung von Copolymerisaten, die duch Copolymerisieren von
a) 5 bis 99 Mol-% N-Vinylcarbonsäureamide der Formel 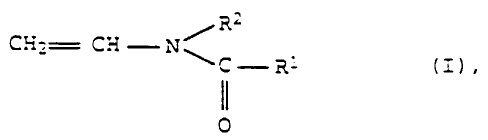 in der R¹, R² = H oder C₁ bis C₆-Alkyl bedeuten,
b) 95 bis 1 Mol-% monoethylenisch ungesättigte Carbonsäuren mit 3 bis 8 C-Atomen und/oder deren Alkalimetall-, Erdalkalimetall- oder Ammoniumsalzen und gegebenenfalls
c) bis zu 30 Mol-% Vinylacetat, N-Vinylpyrrolidon, N-Vinylimidazol oder deren Mischungen und gegebenenfalls
d) bis zu 2 Mol-% an Verbindungen, die mindestens zwei ethylenisch ungesättigte nicht-konjugierte Doppelbindungen im Molekül aufweisen,
und anschließende teilweise oder vollständige Abspaltung der Gruppen 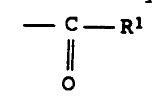 aus den in das Copolymerisat einpolymerisierten Monomeren I unter Bildung von Amin- bzw. Ammoniumgruppen erhältlich sind, als Zusatz zum Papierstoff zur Erhöhung der Entwässerungsgeschwindigkeit und der Retention bei der Papierherstellung sowie der Trocken- und Naßfestigkeit des Papiers.

2. Verwendung nach Anspruch 1, dadurch gekennzeichnet, daß die Copolymerisate durch Copolymerisieren von
a) 30 bis 95 Mol-% N-Vinylformamid,
b) 70 bis 5 Mol-% Acrylsäure, Methacrylsäure und/oder deren Akalimetall-, Erdalkalimetall-, Ammoniumsalzen
und
c) 0 bis 30 Mol-% Vinylacetat, N-Vinylpyrrolidon, N-Vinylimidazol oder deren Mischungen
und anschließende Hydrolyse von 10 bis 100 % der in das Copolymerisat einpolymerisierten Vinylformamideinheiten
erhältlich sind.

3. Verwendung nach Anspruch 1 oder 2, dadurch gekennzeichnet, daß die hydrolysierten Copolymerisate in Mengen von 0,1 bis 5 Gew.-%, bezogen auf trockene Fasern, eingesetzt werden.

## Claims

1. Use of a copolymer which is obtainable by copolymerization of
a) from 5 to 99 mol% of N-vinylcarboxamides of the formula 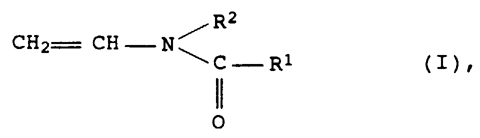 where R¹ and R² are each H or C₁-C₆-alkyl,
b) from 95 to 1 mol% of monoethylenically unsaturated carboxylic acids of 3 to 8 carbon atoms and/or the alkali metal, alkaline earth metal or ammonium salts thereof and, if required,
c) up to 30 mol% of vinyl acetate, N-vinylpyrrolidone, N-vinylimidazole or a mixture thereof and, if required,
d) up to 2 mol% of compounds which have at least two ethylenically unsaturated nonconjugated double bonds in the molecule,
and subsequent partial or complete elimination of the 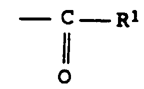 groups from the monomers I polymerized in the copolymer, with formation of amino or ammonium groups, as an additive to paper stock for increasing the drainage rate and the retention in papermaking and the dry and wet strength of the paper.

2. Use as claimed in claim 1, wherein the copolymer is obtainable by copolymerization of
a) from 30 to 95 mol% of N-vinylformamide,
b) from 70 to 5 mol% of acrylic acid, methacrylic acid and/ or the alkali metal, alkaline earth metal or ammonium salts thereof
and
c) from 0 to 30 mol% of vinyl acetate, N-vinylpyrrolidone, N-vinylimidazole or a mixture thereof
and subsequent hydrolysis of from 10 to 100% of the vinylformamide units polymerized in the copolymer.

3. Use as claimed in claim 1 or 2, wherein the hydrolyzed copolymer is used in an amount of from 0.1 to 5% by weight, based on dry fibers.

## Revendications

1. Utilisation de copolymères, que l'on peut obtenir par la copolymérisation de
a) 5 à 99% molaires d'amides d'acides N-vinylcarboxyliques de la formule 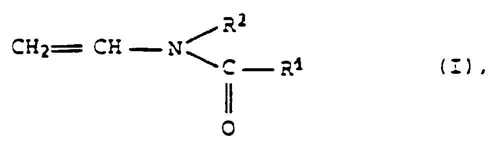 dans laquelle R¹ et R² représentent chacun un atome d'hydrogène ou un groupe alkyle en C₁ à C₅,
b) 95 à 1% molaire d'acides carboxyliques monoéthyléniquement insaturés, possédant de 3 à 8 atomes de carbone et/ou de leurs sels de métaux alcalins, de métaux alcalino-terreux, ou d'ammonium et, éventuellement,
c) jusqu'à 30% molaires d'acétate de vinyle, de N-vinylpyrrolidone, de N-vinylimidazole, ou de leurs mélanges et, éventuellement
d) jusqu'à 2% molaires de composés qui comportent au moins deux doubles liaisons éthyléniquement insaturées et non conjuguées dans la molécule,
et séparation partielle ou totale subséquente des radicaux 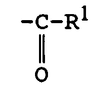 des monomères I incorporés par polymérisation au copolymère, sous formation de groupes amine ou ammonium, à titre d'additif pour la pâte à papier en vue de l'élévation de la vitesse de déshydratation ou d'égouttage et de la rétention au cours de la fabrication du papier, comme aussi de la résistance du papier à l'état sec et à l'état mouillé.

2. Utilisation suivant la revendication 1, caractérisée en ce que l'on peut obtenir les copolymères par la copolymérisation de
a) 30 à 95% molaires de N-vinylformamide,
b) 70 à 5% molaires d'acide acrylique, d'acide méthacrylique et/ou de leurs sels de métaux alcalins, de métaux alcalino-terreux, d'ammonium
et
c) 0 à 30% molaires d'acétate de vinyle, de N-vinylpyrrolidone, de N-vinylimidazole, ou de leurs mélanges
et hydrolyse subséquente de 10 à 100% des unités vinylformamide incorporées par polymérisation au copolymère.

3. Utilisation suivant la revendication 1 ou 2, caractérisée en ce que l'on utilise les copolymères hydrolysés en proportions de 0,1 à 5% en poids, par rapport aux fibres sèches.
